(19) **Europäisches Patentamt / European Patent Office / Office européen des brevets**

(11) **EP 3 427 225 B1**

(12) # FASCICULE DE BREVET EUROPEEN

(45) Date de publication et mention de la délivrance du brevet:
**19.07.2023   Bulletin 2023/29**

(21) Numéro de dépôt: **17715226.1**

(22) Date de dépôt: **13.03.2017**

(51) Classification Internationale des Brevets (IPC):
***G06T 5/50*** *(2006.01)*

(52) Classification Coopérative des Brevets (CPC):
**G06T 5/50;** G06T 2207/20221

(86) Numéro de dépôt international:
**PCT/FR2017/050566**

(87) Numéro de publication internationale:
**WO 2017/153700 (14.09.2017 Gazette 2017/37)**

(54) **PROCÉDÉ DE TRAITEMENT D'IMAGES**

BILDVERARBEITUNGSVERFAHREN

METHOD FOR PROCESSING IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.03.2016   FR 1652068**

(43) Date de publication de la demande:
**16.01.2019   Bulletin 2019/03**

(73) Titulaire: **Bertin Technologies
78180 Montigny-le-Bretonneux (FR)**

(72) Inventeurs:
• **SOULIE, Emmanuel
13120 Gardanne (FR)**
• **ORIOT DE LA CHAPELLE, David
13250 Saint Chamas (FR)**
• **DIAZ, Damien
13480 Calas (FR)**

(74) Mandataire: **Decobert, Jean-Pascal
Hautier IP
20, rue de la Liberté
06000 Nice (FR)**

(56) Documents cités:
**US-A1- 2009 169 102**

• **CATALAN R G ET AL: "Fusion of Multispectral and Panchromatic Images Using Improved IHS and PCA Mergers Based on Wavelet Decomposition", IEEE TRANSACTIONS ON GEOSCIENCE AND REMOTE SENSING, IEEE SERVICE CENTER, PISCATAWAY, NJ, US, vol. 42, no. 6, 1 juin 2004 (2004-06-01), pages 1291-1299, XP011113847, ISSN: 0196-2892, DOI: 10.1109/TGRS.2004.825593**
• **Oguz Gungor ET AL: "A STATISTICAL APPROACH TO MULTIRESOLUTION IMAGE FUSION", , 23 octobre 2005 (2005-10-23), XP055321793, Extrait de l'Internet: URL:https://engineering.purdue.edu/~jshan/publications/2005/Pecora_2005_Fusion.pdf [extrait le 2016-11-22]**
• **Firouz Abdullah Al-Wassai ET AL: "The Statistical methods of Pixel-Based Image Fusion Techniques", , 1 août 2011 (2011-08-01), XP055321860, Extrait de l'Internet: URL:https://arxiv.org/ftp/arxiv/papers/1108/1108.3250.pdf [extrait le 2016-11-22]**
• **GHASSEMIAN H: "Multi-sensor image fusion using multirate filter banks", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 octobre 2001 (2001-10-07), pages 846-849, XP010564992, DOI: 10.1109/ICIP.2001.959178 ISBN: 978-0-7803-6725-8**

- YAN-MEI CHAI ET AL: "Self-adaptive image fusion based on multi-resolution decomposition using wavelet packet analysis", MACHINE LEARNING AND CYBERNETICS, 2004. PROCEEDINGS OF 2004 INTERNATIO NAL CONFERENCE ON SHANGHAI, CHINA AUG. 26-29, 204, PISCATAWAY, NJ, USA,IEEE, PISCATAWAY, NJ, USA, vol. 7, 26 août 2004 (2004-08-26), pages 4049-4053, XP010763158, DOI: 10.1109/ICMLC.2004.1384547 ISBN: 978-0-7803-8403-3
- ARASH GOLIBAGH MAHYARI ET AL: "Panchromatic and Multispectral Image Fusion Based on Maximization of Both Spectral and Spatial Similarities", IEEE TRANSACTIONS ON GEOSCIENCE AND REMOTE SENSING, IEEE SERVICE CENTER, PISCATAWAY, NJ, US, vol. 49, no. 6, 1 juin 2011 (2011-06-01), pages 1976-1985, XP011323301, ISSN: 0196-2892, DOI: 10.1109/TGRS.2010.2103944

**Description**

L'invention concerne un procédé de traitement d'images destiné à l'analyse discriminante d'une zone donnée d'espace observée. L'analyse discriminante peut par exemple consister en une détection de menaces

Sur un terrain d'opérations, il peut être nécessaire de disposer d'outils/dispositifs de détection optique de menaces, aussi bien en journée que durant les périodes de plus faibles luminosités, en particulier pendant la nuit.

On connait des dispositifs comprenant un boitier logeant deux capteurs d'images dont un premier est apte à couvrir un premier domaine spectral et un second est apte a couvrir un second domaine spectral qui est diffèrent du premier domaine spectral, les premier et second capteurs d'images étant aptes a former des images d'une même zone d'espace donnée, des moyens de traitement aptes à détecter une menace située dans ladite zone à partir des images issues du premier capteur et/ou du second capteur.

L'utilisation de plusieurs capteurs d'images aptes à couvrir des domaines spectraux différents autorise une détection d'un grand nombre de menaces, en particulier des menaces ayant des longueurs d'ondes très différentes. Il est également possible de différencier plusieurs types de menaces, selon qu'elles sont détectées par le premier capteur et/ou par le second capteur.

Toutefois, les moyens de traitement implémentés dans ce type de dispositif ne permettent pas une utilisation dans des conditions de faibles luminosités telles qu'on les rencontre la nuit, de sorte que les informations affichées par les capteurs ne s'avèrent la plupart du temps pas assez pertinentes pour un observateur.

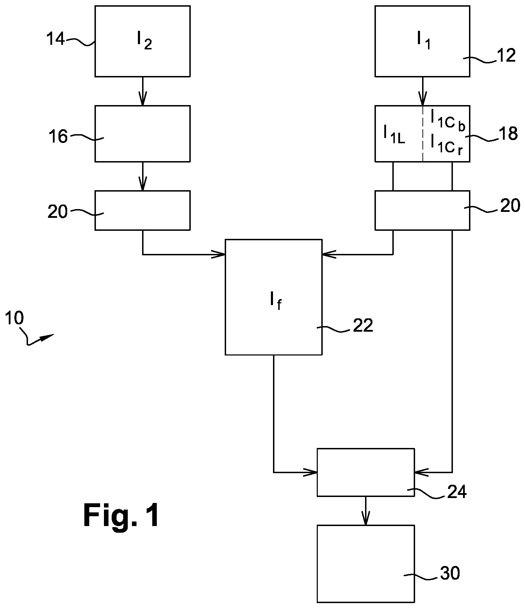

On connait de la publication CATALAN R G ET AL, "Fusion of Multispectral and Panchromatic Images Using Improved IHS and PCA Mergers Based on Wavelet Décomposition", IEEE TRANSACTIONS ON GEOSCIENCE AND REMOTE SENSING, IEEE SERVICE CENTER, PISCATAWAY, NJ, US, (20040601), vol. 42, no. 6, doi:10.1109/TGRS.2004.825593, ISSN 0196-2892, pages 1291 - 1299, XP011113847 [X] 1-4,8-10 * abstract * * figure 1 * * Sections II and III * [I] 5-7,11-13, une méthode de fusion d'images d'une part multispectrales, et d'autre part panchromatiques.

La présente invention a notamment pour but d'éviter ces inconvénients d'une façon simple, efficace et économique.

A cet effet, elle propose un procédé de traitement d'images selon la revendication 1.

Par fusion numérique de deux images (ici $I_{1L}$ et $I_2$), on entend une fusion au niveau pixel (« pixel-level fusion » en anglais), c'est-à-dire que la fusion est réalisée directement à partir des valeurs des pixels des images, et ce sur la totalité de chaque image.

Au contraire des procédés de traitement d'images de la technique antérieure, l'invention propose d'analyser la quantité d'information de chacune des premières image $I_1$ obtenue dans le domaine visible et seconde image $I_2$, obtenue par exemple dans le domaine infrarouge, et de les fusionner numériquement dans une nouvelle image de fusion If et d'ajouter une information de couleur. De cette manière, l'image finale obtenue permet de restituer à un utilisateur une image comprenant des informations en couleurs plus facilement interprétables par un oeil humain du fait de sa forte sensibilité aux longueurs d'ondes visibles.

Selon une autre caractéristique, le procédé consiste préalablement à l'étape c), à réaliser une adaptation des dimensions de celle de la première image $I_1$ et de la seconde image $I_2$ présentant la plus faible résolution aux dimensions de l'autre de la première image et de la seconde image.

Cette étape de déformation vise encore à effectuer des opérations d'agrandissement, de rotation, de décalage et de correction des aberrations géométriques sur l'image présentant la plus faible résolution.

Préalablement à l'étape c), le procédé consiste également à faire correspondre la dynamique de la première image avec la dynamique de la seconde image.

Cette adaptation de dynamique vise essentiellement à rendre comparables les première et seconde images ainsi qu'à permettre une extraction d'un maximum d'information des images lors des étapes subséquentes.

Selon une réalisation particulière de l'invention, la fusion numérique comporte une étape de réalisation de décompositions en fréquences spatiales successives n de l'image de luminance $I_{1L}$, et de la seconde image $I_2$.

Ces décompositions fréquentielles permettent d'appréhender le contenu de chacune des images de luminance $I_{1L}$ et de la seconde image $I_2$ de manière locale, c'est-à-dire au niveau de chaque pixel analysé.

Selon une autre caractéristique du procédé, l'étape de fusion numérique consiste à :

i. réaliser des décompositions, notées respectivement $F_n^{1L}$ et $F_n^2$, en fréquences spatiales successives n de l'image de luminance $I_{1L}$, et de la seconde image $I_2$,

ii. effectuer un calcul d'énergie dans au moins certaines zones des images $F_n^{1L}$, $F_n^2$ chacune associée à une composante fréquentielle n,

iii. calculer une image de pondération $P_n^{1L}$, $P_n^2$, pour chacune des images $F_n^{1L}$, $F_n^2$ associées à une composante fréquentielle n, à partir de l'analyse locale réalisée à l'étape précédente,

iv. pour chaque image $F_n^{1L}$, $F_n^2$ associée à une composante fréquentielle effectuer le calcul suivant :

$$F'_n(x,y) = P_n^{1L}(x,y) \cdot F_n^{1L}(x,y) + P_n^2(x,y) \cdot F_n^2(x,y)$$

v. effectuer une recombinaison de toutes les images F'$_n$ associées chacune à une composante fréquentielle n de manière à obtenir une image fusionnée I$_f$ de toutes les fréquences spatiales.

Selon l'invention, la fusion numérique de l'image de luminance I$_{1L}$, et de la seconde image I$_2$ se base sur une analyse fréquentielle et des contrastes des images comme le fait l'oeil humain.

Dans une réalisation particulière du procédé, la décomposition en fréquences spatiales consiste à appliquer successivement un filtre de moyenne ou passe-bas à chacune de l'image de luminance $I_{1L}$ et de la seconde image $I_2$, selon la formule suivante :

$$F_n^{1L \text{ ou } 2} = G_n = G_{n-1} * S$$

où

$$G_1 = I_e * S$$

S désigne un filtre passe-bas
I$_e$ désigne l'image d'entrée I$_{1L}$ ou I$_2$

En pratique, l'image $F_n^{1L \text{ ou } 2}$ contenant la fréquence la plus élevée est représenté par $F_1^{1L \text{ ou } 2}$ et celle contenant la fréquence la plus faible est représentée par $F_h^{1L \text{ ou } 2}$ où h représente le nombre d'opérations de convolution appliquées à l'image d'entrée I$_e$.

Egalement dans une réalisation pratique de l'invention, l'étape ii) consiste à calculer l'énergie selon la formulation suivante :

$$E_n^{1L \text{ ou } 2}(x,y) = \text{Var}\left( F_n^{1L \text{ ou } 2}\left( \left[ x - \frac{k_x}{2}, x + \frac{k_x}{2} \right], \left[ y - \frac{k_y}{2}, y + \frac{k_y}{2} \right] \right) \right)$$

où k$_x$ et k$_y$ représentent les dimensions d'une fenêtre d'analyse.
Cette énergie est calculée comme une variance locale dans une fenêtre de dimension k$_x \times$ k$_y$.

Les images de pondération $P_n^1$, $P_n^2$ peuvent être obtenues de la manière suivante :

$$P_n^{1L}(x,y) = \frac{\Delta E_n^{\max}(x,y) + \Delta E_n(x,y)}{2 \cdot \Delta E_n^{\max}}$$

$$P_n^2(x,y) = \frac{\Delta E_n^{\max}(x,y) - \Delta E_n(x,y)}{2 \cdot \Delta E_n^{\max}}$$

Où :

$$\Delta E_n(x,y) = E_n^{1L}(x,y) - E_n^2(x,y) \text{ et } \Delta E_n^{\max} = \max\left( \Delta E_n(x,y) \right),$$

$$\mathrm{P}_n^{1\,\text{ou}\,2}(x,y)\epsilon[0,1]$$

Les opérateurs de pondération ainsi définis permettent de favoriser l'information provenant de la première image du spectre visible ou de la seconde image infrarouge, en fonction de leur pertinence. Si l'énergie est équivalente dans les deux images $\mathrm{F}_n^{1\mathrm{L}}$ et $\mathrm{F}_n^2$, l'opérateur de pondération représentera à part équivalent l'une et l'autre des images ce qui ne sera pas le cas si les énergies s'avèrent différentes.

Finalement, l'étape de recombinaison consiste à réaliser le calcul suivant :

$$I_f = \sum_{n=1}^{h} F'_n$$

où h représente le nombre de composantes fréquentielles.

Lorsque la couleur présente un aspect critique de discrimination/identification pour l'observateur, il peut être préférable de ne pas modifier la colorimétrie de l'image finale affichée dans un oculaire d'observation.

A cette fin, l'étape c) consiste ainsi, de préférence, à réaliser une décomposition de la première image $I_1$ en une image de luminance $I_{1L}$ et deux images de chrominance $I_{1C_b}$, et $I_{1C_r}$. L'étape e) consiste alors à recombiner ou resynchroniser l'image de fusion $I_f$ avec les images de chrominance $I_{1C_b}$, et $I_{1C_r}$

Dans une réalisation pratique, le premier capteur est apte à couvrir un domaine spectral appartenant à l'intervalle compris entre 0,4 et 1,1 $\mu$m.

Selon une autre caractéristique de l'invention, le second capteur est apte à couvrir un second domaine spectral appartenant à la gamme des longueurs d'onde infrarouge.

Le second capteur peut être apte à couvrir un domaine spectral appartenant à l'intervalle compris entre 7,5 et 14 $\mu$m.

D'autres avantages et caractéristiques de l'invention apparaîtront à la lecture de la description suivante faite à titre d'exemple non limitatif et en référence aux dessins annexés dans lesquels :

- la figure 1 est un organigramme des principales étapes de traitement effectuées avec le procédé selon l'invention ;
- la figure 2 est un organigramme des principales étapes de traitement effectuées sur lors de l'étape de fusion numérique.

On se réfère tout d'abord à la figure 1 qui représente le principe d'acquisition et de traitement d'images selon l'invention. Le procédé de traitement d'images selon l'invention est destiné à être mis en oeuvre dans un dispositif comportant un boîtier logeant aux moins deux capteurs d'images aptes à couvrir des domaines spectraux différents.

A titre d'exemple, le boîtier comporte ainsi un premier capteur d'images couvrant un domaine spectral compris entre 0,4 et 1,1 $\mu$m situé dans le domaine visible, et un second capteur apte à couvrir un second d'images couvrant un domaine spectral compris entre 7,5 et 14 $\mu$m situé dans le domaine infra-rouge. Les deux capteurs sont agencés dans le boîtier de manière à être aptes à former des images d'une même zone d'espace.

Le procédé 10 selon l'invention consiste à acquérir une première image $I_1$ en 12 d'une zone donnée d'espace à l'aide du premier capteur et à acquérir une seconde image $I_2$ en 14 de la même zone d'espace à l'aide du second capteur.

Dans un premier temps, la seconde image $I_2$ subit un recalage sur la première image $I_1$ en 16. Ce choix résulte essentiellement des dimensions des capteurs utilisés. Généralement, les capteurs infra-rouge, tels que le second capteur, présentent une résolution plus faible que les capteurs du domaine visible tels que le premier capteur. Par exemple, le premier capteur peut avoir une résolution d'image de 1280 par 1024 pixels sur 10 bits et le second capteur peut avoir une résolution d'image de 640 par 480 pixels sur 14 bits. Ainsi, le recalage consiste essentiellement à adapter la résolution de la seconde image obtenue avec le second capteur de manière à ce qu'elle corresponde à la résolution de la première image obtenue avec le premier capteur de manière à conserver intacte la résolution du premier capteur le mieux défini.

Cette étape de recalage consiste également à réaliser une déformation complète de l'image de manière à prendre en compte l'agrandissement à réaliser, la rotation, le décalage et les aberrations géométriques. Pour effectuer le recalage, il est possible d'utiliser des informations a *priori* telles que le positionnement quasi parallèles des axes optiques des systèmes optiques des premier et second capteurs. Il est de plus possible de faire l'hypothèse que les corrections à apporter à la seconde image $I_2$ sont minimes.

Dans une autre étape 18 qui peut être réalisée immédiatement après l'acquisition de la première image $I_1$, on réalise une décomposition de la première image $I_1$ en une image de luminance $I_{1L}$ et deux images de chrominance $I_{1C_b}$, et $I_{1C_r}$. L'image $I_1$ étant une image de modèle (RGB), il s'agit de convertir cette image de modèle (RGB) en une image d'un modèle définissant un espace colorimétrique en trois composantes, à savoir, une composante de luminance et les deux composantes de chrominance. Les valeurs de chaque pixel varient entre 0 et 255 pour chaque canal R, G, et B.

Un exemple de modèle pouvant être utilisé est le modèle Y'CbCr. D'autres modèles peuvent être utilisés, comme par exemple le modèle Y'PbPr, le modèle Y'UV, le modèle TSL ou le modèle Lab. De façon générale, tout modèle permettant d'obtenir une composante de luminance et deux composantes de chrominance peut être utilisé.

On donne ici, à titre d'exemple non limitatif, des calculs permettant de réaliser une conversion d'une image de modèle (RGB) en une composante de luminance $I_1$ et deux composantes de chrominance $I_{1C_b}$, et $I_{1C_r}$ selon un modèle Y'CbCr.

Ainsi l'image $I_1$ est décomposée en :

- une image de luminance notée $I_{1L}$ calculée selon la formule :

$$I_{1L} = 0{,}299\,R + 0{,}587\,G + 0{,}114\,B,$$

- une image de chrominance $I_{1C_b}$ calculée selon la formule :

$$I_{1C_b} = 0{,}1687\,R - 0{,}3313\,G + 0{,}5\,B + 128,$$

- et une image de chrominance $I_{1C_r}$ calculée selon la formule :

$$I_{1C_r} = 0{,}5\,R - 0{,}4187\,G - 0{,}0813\,B + 128.$$

Pour les deux modèles (RGB) et Y'CbCr, les valeurs des pixels pour chaque canal varient ici entre 0 et 255.

Dans une étape subséquente 20, le procédé consiste à effectuer une adaptation de la dynamique de l'image $I_{1L}$ avec la seconde image $I_2$. Comme cela a été évoqué précédemment, les première et seconde images ne sont pas acquises avec une même dynamique, 10 bits par exemple pour la première image et 14 bits pour la seconde image. Il est donc important de ramener les première et seconde images sur une même échelle qui permette d'obtenir des informations sur chacune des première et seconde images pouvant être comparées. En pratique, l'adaptation de la dynamique permet d'adapter la dynamique des images de luminance $I_{1L}$ et des deux images de chrominance $I_{1C_b}$, $I_{1C_r}$ avec la seconde image $I_2$.

Dans une étape ultérieure 22, on réalise la fusion de l'image de luminance $I_{1C_b}$ avec la seconde image $I_2$, ce qui permet d'obtenir l'image $I_f$.

Enfin, dans une ou deux dernières étapes 24 on ajoute une information de couleur à l'image de fusion $I_f$ de manière à obtenir en 30 une image finale fusionnée comportant une information de couleur.

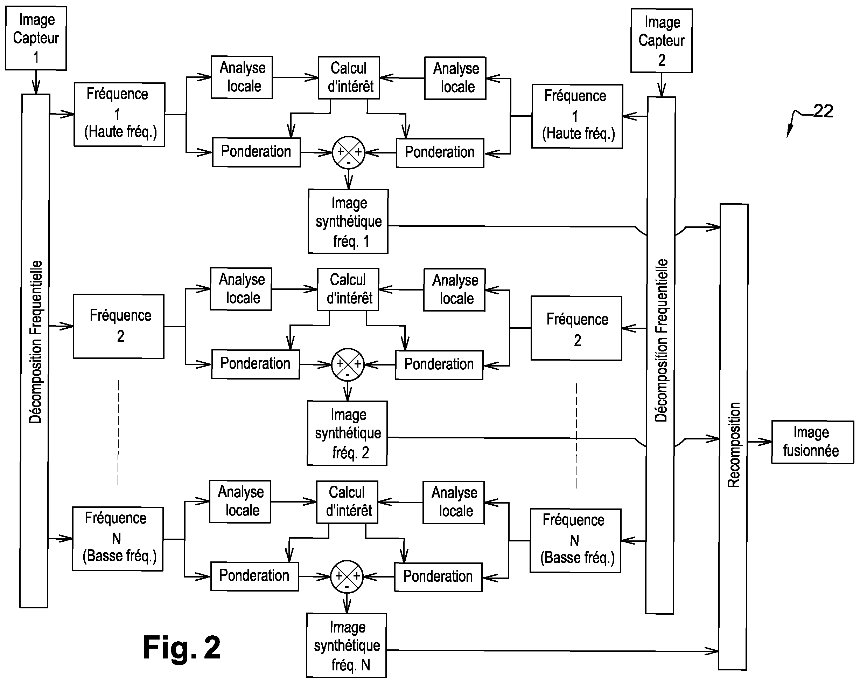

L'étape de fusion 22 proprement dite sera maintenant décrite en détails en référence à la figure 2.

Pour pouvoir appréhender le contenu de chacune des images de luminance $I_{1L}$ et de la seconde image $I_2$ de manière locale, c'est-à-dire au niveau du pixel analysé, on effectue une décomposition en fréquence spatiales. Ainsi, la décomposition en fréquences spatiales est effectuée pour l'image de luminance $I_{1L}$, et la seconde image $I_2$. Il est ici fait référence aux images $I_{1L}$ et $I_2$ qui sont les images obtenues après recalage et adaptation de la dynamique.

De manière générale, pour obtenir la première fréquence spatiale F1 (la fréquence la plus élevée), on filtre tout d'abord l'image par convolution avec un filtre K de moyenne ou « passe-bas » qui peut prendre la forme d'une simple moyenne locale dans une fenêtre de m par m pixels, soit la forme d'une gaussienne qui pondère alors les pixels de cette même fenêtre de calcul par des coefficients décrivant une gaussienne. On obtient ainsi une image $G_1$ « filtrée » sous-entendu « filtrée passe-bas » :

$$G_1 = I_e * S$$

Cette image filtrée est soustraite de l'image d'origine. On obtient alors une image F1 ne contenant que des hautes fréquences :

$$F_1 = I_e - G_1 = I_e - (I_e * S)$$

La seconde fréquence spatiale $F_2$ est obtenue en reproduisant le schéma précédent mais en utilisant comme image d'entrée, l'image filtrée précédente $F_1$. Cette image filtrée est donc de nouveau filtrée avec le même filtre passe-bas que précédemment et on obtient par différence une image F2 :

$$F_2 = G_1 - G_2 = G_1 - (G_1 * S)$$

Par récurrence, on obtient

$$G_{n+1} = (G_n * S) \qquad \text{et} \qquad F_{n+1} = G_n - (G_n * S)$$

La dernière fréquence h sera représentée par la dernière convolution et représentera également le niveau moyen local de l'image :

$$F_h = G_h = G_{h-1} * S$$

Ainsi, on notera $F_n^{1L} = G_{n-1} * S$ avec $G_1 = I_{1L} * S$ et $F_n^2 = G_{n-1} * S$ avec $G_1 = I_2 * S$.

Dans une seconde étape de traitement, on effectue un calcul d'énergie dans au moins certaines zones des images de chacune des composantes fréquentielles $F_n^{1L}$ et $F_n^2$. On choisit ici d'effectuer une analyse compatible avec un traitement temps réel permettant une restitution instantanée d'une information à un observateur. Pour cela, on effectue une analyse par comparaison des énergies de chacune des images $F_n^{1L}$ et $F_n^2$. Cette analyse consiste à calculer la variance locale dans une fenêtre de dimensions kx × ky centrée sur le pixel analysé ce qui donne :

$$E_n^{1L}(x,y) = \mathrm{Var}\left( F_n^{1L}\left( \left[x - \frac{k_x}{2}, x + \frac{k_x}{2}\right], \left[y - \frac{k_y}{2}, y + \frac{k_y}{2}\right]\right)\right)$$

et,

$$E_n^2(x,y) = \mathrm{Var}\left( F_n^2\left( \left[x - \frac{k_x}{2}, x + \frac{k_x}{2}\right], \left[y - \frac{k_y}{2}, y + \frac{k_y}{2}\right]\right)\right)$$

Dans une étape ultérieure, le procédé consiste à calculer une image de pondération $P_n^{1L}$, $P_n^2$, pour chacune des images $F_n^{1L}$, $F_n^2$ associées à une composante fréquentielle n, à partir de l'analyse locale d'énergie réalisée à l'étape précédente. Pour cela, on réalise la différence de ces énergies :

$$\Delta E_n(x,y) = E_n^{BNL}(x,y) - E_n^{IR}(x,y)$$

Puis, on en calcule le maximum :

$$\Delta E_n^{max} = \max\left(\Delta E_n(x,y)\right)$$

On calcule ensuite une image de pondération pour chaque composante fréquentielle, ces pondérations étant telles que :

$$P_n^{1L}(x,y) = \frac{\Delta E_n^{max} + \Delta E_n(x,y)}{2 \cdot \Delta E_n^{max}}$$

$$P_n^2(x,y) = \frac{\Delta E_n^{max} - \Delta E_n(x,y)}{2 \cdot \Delta E_n^{max}}$$

avec

$$P_n(x,y) \in [0,1]$$

Les images de pondération pour chaque fréquence spatiale $P_n^{1L}(x,y)$ et $P_n^2(x,y)$ sont ensuite appliquées aux images respectives $F_n^{1L}$ et $F_n^2$ et enfin sommé selon la formule suivante :

$$F'_n(x,y) = P_n^{1L}(x,y) \cdot F_n^{1L}(x,y) + P_n^2(x,y) \cdot F_n^2(x,y)$$

L'image synthétique F'_n(x,y) pour la fréquence spatiale n se rapproche ainsi, du fait de la pondération appliquée, de l'image $F_n^{1L}$ ou $F_n^2$ qui contient le plus d'information.

La recomposition des fréquences spatiales est le processus inverse de l'étape 1. On commence donc par la fréquence h la plus basse, c'est-à-dire la dernière issue de la décomposition décrite précédemment, ce qui donne :

$$G'_h = F'_h$$

Puis on recompose avec les fréquences spatiales précédentes :

$$G'_{h-1} = F'_{h-1} + G'_h$$

Si $I_f$ est le résultat de la recombinaison alors :

$$I_f = G_0 = \sum_{n=1}^{h} F'_n$$

où h représente le nombre de composantes fréquentielles.

Après l'obtention de l'image de fusion $I_f$, le procédé consiste à ajouter une information de couleur à l'image de fusion $I_f$.

Ainsi, le procédé consiste à d'utiliser la couleur du premier capteur. Pour cela l'ajout de l'information de couleur s'effectue en sommant ou resynchronisant l'image de fusion $I_f$ avec les images de chrominance $I_{1C_b}$, et $I_{1C_r}$ dont les dynamiques ont été adaptées comme évoqués précédemment.

En pratique, on comprend que ce type d'ajout d'information couleur s'avéra de moins en moins pertinent au fur et à mesure que le niveau de luminosité de la zone observé diminue. En effet, l'information de couleur provenant des images de chrominance sera au fur et à mesure de plus en plus réduite.

Il est rappelé que les niveaux de nuit sont depuis longtemps standardisés selon le tableau suivant qui est rappelé à titre informatif et est bien connu de l'état de la technique.

| Niveau de Nuit | 1 | 2 | 3 | 4 | 5 |
|---|---|---|---|---|---|
| Source de Lumière | Pleine lune | Demi-lune | Lune partielle | Ciel clair étoilé | Ciel couvert |
| Valeurs (mlux) | 1000 ⇔ 40 | 40 ⇔ 10 | 10 ⇔ 2 | 2 ⇔ 0.7 | 0.7 ⇔ 0 |

Les unités indiquées dans le tableau ci-dessus sont en lux qui est unité dérivé du système international, tel que 1 lux=1 cd·sr·m$^{-2}$. Ce tableau indique les valeurs de niveau de nuit en fonction de l'éclairement lumineux, un type de ciel étant associé à chaque niveau de nuit.

## Revendications

1. Procédé (10) de traitement d'images à l'aide d'un dispositif comprenant au moins un boîtier comprenant au moins un premier capteur d'images apte à couvrir un premier domaine spectral et au moins un second capteur d'images apte à couvrir un second domaine spectral, différent du premier domaine spectral, les premier et second capteurs étant aptes à former des images d'une même zone d'espace, le premier capteur étant apte à couvrir un domaine spectral appartenant à la gamme des longueurs d'onde du spectre visible, le second capteur étant apte à couvrir un second domaine spectral appartenant à la gamme des longueurs d'onde infrarouge, le procédé consistant à :

     a) acquérir (12) une première image $I_1$ de ladite zone d'espace donnée à l'aide du premier capteur d'images,
     b) acquérir (14) une seconde image $I_2$ de ladite zone d'espace donnée à l'aide du second capteur d'images,
     c) réaliser une décomposition de la première image $I_1$ de manière à obtenir au moins une image de luminance $I_{1L}$,
     d) à obtenir une image $I_f$ résultant de la fusion numérique (22) de l'image de luminance $I_{1L}$ et de la seconde image $I_2$,
     e) à ajouter une information de couleur à l'image de fusion $I_f$, ledit procédé étant **caractérisé en ce que** la fusion numérique consiste à :

          - réaliser des décompositions, notées respectivement $F_n^{1L}$ et $F_n^2$, en fréquences spatiales successives n de l'image de luminance $I_{1L}$, et de la seconde image $I_2$,

          - effectuer un calcul d'énergie dans au moins certaines zones des images $F_n^{1L}$, $F_n^2$ chacune associée à une composante fréquentielle n,

          - calculer une image de pondération $P_n^{1L}$, $P_n^2$, pour chacune des images $F_n^{1L}$, $F_n^2$ associées à une composante fréquentielle n, à partir de l'analyse locale réalisée à l'étape précédente,

          - pour chaque image $F_n^{1L}$, $F_n^2$, associée à une composante fréquentielle effectuer le calcul suivant :

$$F'_n(x, y) = P_n^{1L}(x, y) \cdot F_n^{1L}(x, y) + P_n^2(x, y) \cdot F_n^2(x, y)$$

          - effectuer une recombinaison de toutes les images $F'_n$ associées chacune à une composante fréquentielle n de manière à obtenir une image fusionnée $I_f$ de toutes les fréquences spatiales.

2. Procédé selon la revendication 1, **caractérisé en ce qu'**il consiste, préalablement à l'étape c), à réaliser une adaptation (16) des dimensions de celle de la première image $I_1$ et de la seconde image $I_2$ présentant la plus faible résolution aux dimensions de l'autre de la première image et de la seconde image.

3. Procédé selon la revendication 1 ou 2, **caractérisé en ce qu'**il consiste, préalablement à l'étape c), à faire correspondre la dynamique (20) de la première image $I_1$ avec la dynamique de la seconde image $I_2$.

4. Procédé l'une quelconque des revendications précédentes, **caractérisé en ce que** la décomposition en fréquences spatiales consiste à appliquer successivement un filtre de moyenne ou passe-bas à chacune de l'image de luminance $I_{1L}$ et de la seconde image $I_2$, selon la formule suivante :

$$F_n^{1L \text{ ou } 2} = G_n = G_{n-1} * S$$

     où $G_1 = I_e * S$
     S désigne un filtre passe-bas
     $I_e$ désigne l'image d'entrée $I_{1L}$ ou $I_2$

5. Procédé selon l'une quelconque des revendications précédentes, **caractérisé en ce que** l'étape ii) consiste à calculer l'énergie selon la formulation suivante :

$$E_n^{1L \text{ ou } 2}(x,y) = \text{Var}\left( F_n^{1L \text{ ou } 2}\left( \left[ x - \frac{k_x}{2}, x + \frac{k_x}{2} \right], \left[ y - \frac{k_y}{2}, y + \frac{k_y}{2} \right] \right) \right)$$

où $k_x$ et $k_y$ représentent les dimensions d'une fenêtre d'analyse.

6. Procédé selon la revendication précédente, **caractérisé en ce que** les images de pondération $P_n^1$, $P_n^2$ sont obtenues de la manière suivante :

$$P_n^{1L}(x,y) = \frac{\Delta E_n^{\max}(x,y) + \Delta E_n(x,y)}{2 \cdot \Delta E_n^{\max}}$$

$$P_n^2(x,y) = \frac{\Delta E_n^{\max}(x,y) - \Delta E_n(x,y)}{2 \cdot \Delta E_n^{\max}}$$

Où : $\Delta E_n(x,y) = E_n^{1L}(x,y) - E_n^2(x,y)$ et $\Delta E_n^{\max} = \max\left( \Delta E_n(x,y) \right)$

7. Procédé selon l'une quelconque des revendications précédentes, **caractérisé en ce que** l'étape de recombinaison consiste à réaliser le calcul suivant :

$$I_f = \sum_{n=1}^{h} F'_n$$

où h représente le nombre de composantes fréquentielles.

8. Procédé selon l'une des revendications précédentes, **caractérisé en ce que** l'étape c) consiste à réaliser une décomposition de la première image $I_1$ en une image de luminance $I_{1L}$ et deux images de chrominance $I_{1C_b}$, et $I_{1C_r}$.

9. Procédé selon la revendication précédente, **caractérisé en ce que** l'étape e) consiste à sommer l'image de fusion $I_f$ avec les images de chrominance $I_{1C_b}$, et $I_{1C_r}$.

10. Procédé selon l'une des revendications précédentes, **caractérisé en ce que** le premier capteur est apte à couvrir un domaine spectral appartenant à l'intervalle compris entre 0,4 et 1,1 $\mu$m.

11. Procédé selon l'une des revendications précédentes, **caractérisé en ce que** le second capteur est apte à couvrir un domaine spectral appartenant à l'intervalle compris entre 7,5 et 14 $\mu$m.

**Patentansprüche**

1. Verfahren (10) zur Verarbeitung von Bildern mit Hilfe einer Vorrichtung, die mindestens ein Gehäuse umfasst, das mindestens einen ersten Bildsensor umfasst, der imstande ist, einen ersten Spektralbereich abzudecken, und mindestens einen zweiten Bildsensor, der imstande ist, einen zweiten Spektralbereich abzudecken, der vom ersten Spektralbereich verschieden ist, wobei der erste und zweite Sensor imstande ist, Bilder desselben Raumbereichs zu bilden, wobei der erste Sensor imstande ist, einen Spektralbereich abzudecken, der zum Wellenlängenbereich des sichtbaren Spektrums gehört, wobei der zweite Sensor imstande ist, einen zweiten Spektralbereich abzudecken, der zum Infrarot-Wellenlängenbereich gehört, wobei das Verfahren darin besteht:

a) Erfassen (12) eines ersten Bilds $I_1$ des gegebenen Raumbereichs mit Hilfe des ersten Bildsensors,

b) Erfassen (14) eines zweiten Bilds $I_2$ des gegebenen Raumbereichs mit Hilfe des zweiten Bildsensors,
c) Durchführen einer Zerlegung des ersten Bilds $I_1$ derart, das mindestens ein Luminanzbild $I_{1L}$ erhalten wird,
d) Erhalten eines Bilds $I_f$ als Ergebnis der digitalen Fusion (22) des Luminanzbilds $I_{1L}$ und des zweiten Bilds $I_2$,
e) Hinzufügen einer Farbinformation zum Fusionsbild $I_f$, wobei das Verfahren **dadurch gekennzeichnet ist, dass** die digitale Fusion darin besteht:

- Durchführen der Zerlegungen, jeweils bezeichnet als $F_n^{1L}$ und $F_n^2$, in aufeinanderfolgende Spatialfrequenzen n des Luminanzbilds $I_{1L}$ und des zweiten Bilds $I_2$,

- Durchführen einer Energieberechnung in mindestens bestimmten Bereichen der Bilder $F_n^{1L}$, $F_n^2$, die jeweils einer Frequenzkomponente n zugeordnet sind,

- Berechnen eines Gewichtungsbilds $P_n^{1L}$, $P_n^2$ für jedes der Bilder $F_n^{1L}$, $F_n^2$, die einer Frequenzkomponente n zugeordnet sind, ausgehend von der in vorangehendem Schritt durchgeführten lokalen Analyse,

- Durführen, für jedes Bild $F_n^{1L}$, $F_n^2$, das einer Frequenzkomponente zugeordnet ist, der folgenden Berechnung:

$$F'_n(x,y) = P_n^{1L}(x,y) \cdot F_n^{1L}(x,y) + P_n^2(x,y) \cdot F_n^2(x,y)$$

- Durchführen einer Rekombination aller Bilder $F'_n$, die jeweils einer Frequenzkomponente n zugeordnet sind, so dass ein fusioniertes Bild $I_f$ aller Spatialfrequenzen erhalten wird.

2. Verfahren nach Anspruch 1, **dadurch gekennzeichnet, dass** es darin besteht, vor dem Schritt c) eine Anpassung (16) der Abmessungen des ersten Bilds $I_1$ und des zweiten Bilds $I_2$ mit der kleinsten Auflösung zu den Abmessungen von dem anderen von dem ersten Bild und dem zweiten Bild durchzuführen.

3. Verfahren nach Anspruch 1 oder 2, **dadurch gekennzeichnet, dass** es darin besteht, vor dem Schritt c) eine Übereinstimmung der Dynamik (20) des ersten Bilds $I_1$ mit der Dynamik des zweiten Bilds $I_2$ herbeizuführen.

4. Verfahren nach einem der vorangehenden Ansprüche, **dadurch gekennzeichnet, dass** die Zerlegung in Spatialfrequenzen darin besteht, aufeinanderfolgend einen Mittel- oder Tiefpassfilter auf jedes Luminanzbild $I_{1L}$ und zweite Bild $I_2$ gemäß der folgenden Formel anzuwenden:

$$F_n^{1L\ ou\ 2} = G_n = G_{n-1} * S$$

wobei

$$G_1 = I_e * S$$

wobei S einen Tiefpassfilter bezeichnet
wobei $I_e$ das Eingangsbild $I_{1L}$ oder $I_2$ bezeichnet.

5. Verfahren nach einem der vorangehenden Ansprüche, **dadurch gekennzeichnet, dass** der Schritt ii) darin besteht, die Energie gemäß der folgenden Formel zu berechnen:

$$E_n^{1L\ ou\ 2}(x,y) = Var\left( F_n^{1L\ ou\ 2}\left( \left[x - \frac{k_x}{2}, x + \frac{k_x}{2}\right], \left[y - \frac{k_y}{2}, y + \frac{k_y}{2}\right]\right)\right)$$

wobei $k_x$ und $k_y$ die Abmessungen eines Analysefensters darstellen.

6. Verfahren nach vorangehendem Anspruch, **dadurch gekennzeichnet, dass** die Gewichtungsbilder $P_n^1$, $P_n^2$ folgendermaßen erhalten werden:

$$P_n^{1L}(x,y) = \frac{\Delta E_n^{max}(x,y) + \Delta E_n(x,y)}{2 \cdot \Delta E_n^{max}}$$

$$P_n^2(x,y) = \frac{\Delta E_n^{max}(x,y) - \Delta E_n(x,y)}{2 \cdot \Delta E_n^{max}}$$

wobei $\Delta E_n(x,y) = E_n^{1L}(x,y) - E_n^2(x,y)$ und $\Delta E_n^{max} = \max(\Delta E_n(x,y))$ .

7. Verfahren nach einem der vorangehenden Ansprüche, **dadurch gekennzeichnet, dass** der Rekombinationsschritt darin besteht, die folgende Berechnung durchzuführen:

$$I_f = \sum_{n=1}^{h} F'_n$$

wobei h die Anzahl der Frequenzkomponenten darstellt.

8. Verfahren nach einem der vorangehenden Ansprüche, **dadurch gekennzeichnet, dass** der Schritt c) darin besteht, eine Zerlegung des ersten Bilds $I_1$ in ein Luminanzbild $I_{1L}$ und zwei Chrominanzbilder $I_{1C_b}$ und $I_{1C_r}$ durchzuführen.

9. Verfahren nach vorangehendem Anspruch, **dadurch gekennzeichnet, dass** der Schritt e) darin besteht, das Fusionsbild $I_f$ mit den Chrominanzbildern $I_{1C_b}$ und $I_{1C_r}$ zu addieren.

10. Verfahren nach einem der vorangehenden Ansprüche, **dadurch gekennzeichnet, dass** der erste Sensor imstande ist, einen Spektralbereich abzudecken, der zu einem Intervall gehört, das zwischen 0,4 und 1,1 $\mu$m liegt.

11. Verfahren nach einem der vorangehenden Ansprüche, **dadurch gekennzeichnet, dass** der zweite Sensor imstande ist, einen Spektralbereich abzudecken, der zu einem Intervall gehört, das zwischen 7,5 und 14 $\mu$m liegt.

**Claims**

1. Method (10) for processing images using a device comprising at least one case comprising at least one first image sensor capable of covering a first spectral range and at least one second image sensor capable of covering a second spectral range, different from the first spectral range, the first and second sensor being capable of forming images of the same zone of space, the first sensor being capable of covering a spectral range belonging to the range of the wavelengths of the visible spectrum, the second sensor being capable of covering a second spectral range belonging to the range of the infrared wavelengths, the method involving:

   a) acquiring (12) a first image $I_1$ of said given zone of space using the first image sensor,
   b) acquiring (14) a second image $I_2$ of said given zone of space using the second image sensor,
   c) carrying out a decomposition of the first image $I_1$ so as to obtain at least one image of luminance $I_{1L}$,
   d) obtaining an image $I_f$ resulting from the digital fusion (22) of the image of luminance $I_{1L}$ and of the second image $I_2$,
   e) adding a piece of information on colour to the fusion image $I_f$,

   said method being **characterised in that** the digital fusion involves:

   - carrying out decompositions, respectively noted as $F_n^{1L}$ and $F_n^2$, into successive spatial frequencies n of the image of luminance $I_{1L}$, and of the second image $I_2$,

   - carrying out a calculation of energy in at least some zones of the images $F_n^{1L}$, $F_n^2$ each associated with a frequency component n,

   - calculating a weighting image $P_n^{1L}$, $P_n^2$, for each of the images $F_n^{1L}$, $F_n^2$ associated with a frequency component n, from the local analysis carried out in the previous step,

- for each image $F_n^{1L}$, $F_n^2$ associated with a frequency component carrying out the following calculation:

$$F'_n(x,y) = P_n^{1L}(x,y) \cdot F_n^{1L}(x,y) + P_n^2(x,y) \cdot F_n^2(x,y)$$

- carrying out a recombination of all the images F'$_n$ each associated with a frequency component n so as to obtain a fused image I$_f$ of all the spatial frequencies.

2. Method according to claim 1, **characterised in that** it involves, before step c), carrying out an adaptation (16) of the dimensions of the one out of the first image $I_1$ and the second image $I_2$ having the lowest resolution to the dimensions of the other out of the first image and the second image.

3. Method according to claim 1 or 2, **characterised in that** it involves, before step c), making the dynamic range (20) of the first image $I_1$ correspond to the dynamic range of the second image $I_2$.

4. Method according to any one of the preceding claims, **characterised in that** the decomposition into spatial frequencies involves successively applying an average or low-pass filter to each of the image of luminance $I_{1L}$ and the second image $I_2$, according to the following formula:

$$F_n^{1L \text{ or } 2} = G_n = G_{n-1} \star S$$

where

$$G_1 = I_e \star S$$

S designates a low-pass filter
$I_e$ designates the input image $I_{1L}$ or $I_2$.

5. Method according to any one of the preceding claims, **characterised in that** step ii) involves calculating the energy according to the following formula:

$$E_n^{1L \text{ or } 2}(x,y) = \text{Var}\left(F_n^{1L \text{ or } 2}\left(\left[x - \frac{k_x}{2}, x + \frac{k_x}{2}\right], \left[y - \frac{k_y}{2}, y + \frac{k_y}{2}\right]\right)\right)$$

where $k_x$ and $k_y$ represent the dimensions of an analysis window.

6. Method according to the preceding claim, **characterised in that** the weighting images $P_n^1$, $P_n^2$, are obtained in the following manner:

$$P_n^{1L}(x,y) = \frac{\Delta E_n^{max}(x,y) + \Delta E_n(x,y)}{2 \cdot \Delta E_n^{max}}$$

$$P_n^2(x,y) = \frac{\Delta E_n^{max}(x,y) - \Delta E_n(x,y)}{2 \cdot \Delta E_n^{max}}$$

Where: $\Delta E_n(x,y) = E_n^{1L}(x,y) - E_n^2(x,y)$ and $\Delta E_n^{max} = \max(\Delta E_n(x,y))$.

7. Method according to any one of the preceding claims, **characterised in that** the step of recombination involves carrying out the following calculation:

$$I_f = \sum_{n=1}^{h} F'_n$$

where h represents the number of frequency components.

8. Method according to one of the preceding claims, **characterised in that** step c) involves carrying out a decomposition of the first image $I_1$ into an image of luminance $I_{1L}$ and two images of chrominance $I_{1C_b}$, and $I_{1C_r}$.

9. Method according to the preceding claim, **characterised in that** step e) involves summing the fusion image $I_f$ with the images of chrominance $I_{1C_b}$, and $I_{1C_r}$

10. Method according to one of the preceding claims, **characterised in that** the first sensor is capable of covering a spectral range belonging to the interval between 0.4 and 1.1pm.

11. Method according to one of the preceding claims, **characterised in that** the second sensor is capable of covering a spectral range belonging to the interval between 7.5 and 14$\mu$m.

14 — $I_2$

$I_1$ — 12

16

$I_{1L}$   $I_{1C_b}$   $I_{1C_r}$ — 18

20

20

$I_f$ — 22

10

24

30

**Fig. 1**

**Fig. 2**

**RÉFÉRENCES CITÉES DANS LA DESCRIPTION**

**Littérature non-brevet citée dans la description**

- Fusion of Multispectral and Panchromatic Images Using Improved IHS and PCA Mergers Based on Wavelet Décomposition. **CATALAN R G et al.** IEEE TRANSACTIONS ON GEOSCIENCE AND REMOTE SENSING. IEEE SERVICE CENTER, 01 Juin 2004, vol. 42, 1291-1299